# EUROPEAN PATENT APPLICATION

(11) **EP 4 672 138 A1**
(43) Date of publication of application: **31.12.2025**
(21) Application number: 25184287.8
(22) Date of filing: 20.06.2025
(51) Int. Cl.: G06T 5/73

(54) **IMAGE PROCESSING METHOD, IMAGE PROCESSING APPARATUS, AND STORAGE MEDIUM**

(30) Priority: 27.06.2024 JP 2024103698
(71) Applicant: CANON KABUSHIKI KAISHA, Tokyo 146-8501 (JP)
(72) Inventor: KIMURA, Yoshinori, Tokyo, 146-8501 (JP)
(74) Representative: Canon Europe Limited

(57) **Abstract**

An image processing method includes generating, by dividing a first image, a plurality of second images each of which is smaller than the first image, and generating a plurality of third images based on the plurality of second images. The plurality of second images includes an image including an overlapping area having a first number of pixels that overlap an adjacent image and an image including an overlapping area having a second number of pixels that overlap an adjacent image, the second number of pixels being different from the first number of pixels. The plurality of third images is generated by using a machine learning model.

## Description

### TECHNICAL FIELD

The present disclosure relates to a method for processing images by using a machine learning model.

### BACKGROUND

### Description of the Related Art

In image processing using a machine learning model, instead of processing an input image as a whole, there are cases in which the input image is divided into a plurality of patches (areas, portions, or tiles) to be sequentially processed. In addition, there is known a process for unifying the sizes (e.g., the individual number of pixels) of the plurality of patches by performing padding, in which pixels are added around the borders of the input image, and overlapping, in which some of the pixels of adjacent patches among the plurality of patches are overlapped with each other.

United States Patent Publication Application No. 2022-0309027 discloses an image processing method for generating an estimated image by inputting (feeding), into a machine learning model, a plurality of patches that are obtained by dividing an input image having a predetermined number of pixels and that overlap with a certain number of pixels.

### SUMMARY

According to a first aspect of the present disclosure, there is provided an image processing method comprising: generating, by dividing a first image, a plurality of second images each of which is smaller than the first image; and generating a plurality of third images based on the plurality of second images, wherein the plurality of second images includes an image including an overlapping area having a first number of pixels that overlap an adjacent image and an image including an overlapping area having a second number of pixels that overlap an adjacent image, the second number of pixels being different from the first number of pixels, and wherein the plurality of third images is generated by using a machine learning model.

According to a second aspect of the present disclosure, there is provided an image processing apparatus comprising at least one processor configured to perform operations as: a first means for generating, by dividing a first image, a plurality of second images each of which is smaller than a first image; and a second means for generating a plurality of third images based on the plurality of second images, wherein the plurality of second images includes an image including an overlapping area having a first number of pixels that overlap an adjacent image and an image including an overlapping area having a second number of pixels that overlap an adjacent image, and wherein the second means generates the plurality of third images by using a machine learning model.

According to a third aspect of the present disclosure, there is provided a program for causing a computer to execute the image processing method according to the first aspect.

According to a fourth aspect of the present disclosure, there is provided a non-transitory computer-readable storage medium for storing the program of the third aspect.

Optional aspects of the present invention will now be set out, which may be applicable to any one of the above aspects.

Optionally, the image processing method comprises generating the first image by adding to an input image an additional area to at least one border of the input image (e.g., a plurality of borders, or each border). For example, the additional area may be added around the border (e.g., the periphery, or perimeter) of the input image.

Optionally, in generating the plurality of second images, an overlapping area in a second image positioned at an outermost edge among the plurality of second images has the first number of pixels.

Optionally, in generating the plurality of second images, an overlapping area in a second image other than the second image positioned at the outermost edge has the second number of pixels.

Optionally, the first number of pixels is any one of a predetermined fixed value, a value based on an instruction from a user, a value based on an imaging apparatus used for acquiring the first image, and a value based on an image-capturing mode of the imaging apparatus.

Optionally, the second number of pixels is any one of a predetermined fixed value, a value based on an instruction from a user, a value based on an imaging apparatus used for acquiring the first image, and a value based on an image-capturing mode of the imaging apparatus.

Optionally, the number of pixels in the additional area is any one of a predetermined fixed value, a value based on an instruction from a user, a value based on an imaging apparatus used for acquiring the input image, and a value based on an image-capturing mode of the imaging apparatus.

Optionally, the image processing method comprises generating a fourth image by synthesizing the plurality of third images.

Optionally, in generating the fourth image, the plurality of third images is synthesized by: spatially concatenating the third images adjacent to each other after removing at least a part of the overlapping area in the plurality of third images; or by performing weighted averaging on the plurality of third images.

Optionally, n generating the plurality of second images, the plurality of second images is generated, the second images including an image that includes at least one overlapping area having a third number of pixels shared with an adjacent image in a horizontal direction and includes at least one overlapping area having a fourth number of pixels shared with an adjacent image in a vertical direction and an image that includes at least one overlapping area having a fifth number of pixels shared with an adjacent image in the horizontal or vertical direction.

Optionally, the third number of pixels, the fourth number of pixels, and the fifth number of pixels are different from each other.

Optionally, in adjusting the plurality of second images, the plurality of second images includes an image having a predetermined number of pixels and an image having the number of pixels smaller than the predetermined number of pixels.

Optionally, in adjusting the plurality of second images, the image having the number of pixels smaller than the predetermined number of pixels is adjusted to have the predetermined number of pixels.

Optionally, in adjusting the plurality of second images, by adding an additional area around the borders of the image having the number of pixels smaller than the predetermined number of pixels, the number of pixels is adjusted to be the predetermined number of pixels.

Optionally, in adjusting the plurality of second images, by increasing an overlapping area in the image having the number of pixels smaller than the predetermined number of images, the number of pixels is adjusted to be the predetermined number of pixels.

Features of the present disclosure will become apparent from the following description of embodiments with reference to the attached drawings. The following description of embodiments is described by way of example.

### BRIEF DESCRIPTION OF THE DRAWINGS

Figs. 1A to 1D illustrate an overview of image processing according to example embodiments.
Fig. 2 illustrates tile division according to the example embodiments.
Figs. 3A and 3B illustrate tile synthesis according to the example embodiments.
Fig. 4 is a block diagram of an image processing system according to a first example embodiment.
Fig. 5 is an external view of the image processing system according to the first example embodiment.
Fig. 6 illustrates a learning process of a machine learning model according to the first example embodiment.
Fig. 7 is a flowchart relating to learning of the machine learning model according to the first example embodiment.
Fig. 8 is a flowchart relating to image processing using the machine learning model according to the first example embodiment.
Fig. 9 is a block diagram of an image processing system according to a second example embodiment.
Fig. 10 is an external view of the image processing system according to the second example embodiment.
Fig. 11 is a block diagram of an image processing system according to a third example embodiment.
Fig. 12 is a flowchart relating to image processing using the machine learning model according to the third example embodiment.

### DESCRIPTION OF THE EMBODIMENTS

Hereinafter, an example embodiment of the present disclosure will be described in detail with reference to the drawings. In the drawings, the same components are denoted by the same reference numerals, and redundant description will be omitted.

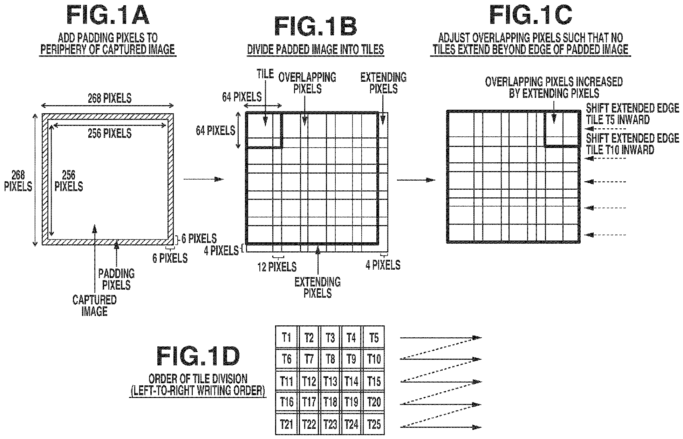

First, image processing using a machine learning model according to first to third example embodiments will be described with reference to Figs. 1A to 1D, 2, 3A, and 3B.

In the present example embodiment, as illustrated in Fig. 1A, a padded image (a first image) is generated by adding (providing) a predetermined number of extra pixels around the borders of an input image of 256 × 256 pixels (the number of pixels in a vertical direction × a horizontal direction). In Fig. 1A, an additional area added by the padding is indicated as a hatched portion. The predetermined number of pixels in Fig. 1 is six pixels, and the same number of pixels is added to each of the four sides of the input image in Fig. 1. Thus, the image (the first image) having a size of 268 × 268 pixels is obtained by the padding. For example, if a long and narrow patch (e.g., area) having a width of one pixel needs to be divided from an edge of the input image, there is no guarantee that the machine learning model can process this patch with the same level of accuracy as the other patches. In such a case, it is preferable to add pixels by padding.

In the present example embodiment, a method called "mirroring (or reflect padding)" is used as a padding method. In this method, extra pixels are added around the borders of the input image by folding six pixels inward from the edge of the input image outward with the edge of the input image used as the rotational axis.

Next, as illustrated in Fig. 1B, the padded image is divided into a plurality of tiles (second images) each having a predetermined number of pixels. In Fig. 1B, for the sake of description, the padded image (258 × 258 pixels) and a tile (64 × 64 pixels) at the upper left edge are indicated by thick lines. In Fig. 1B, each tile is generated with portions (overlapping areas) overlapping its adjacent tiles by a predetermined number of pixels when the tile division is performed. Thus, when the padded image is subjected to the tile division, the padded image is divided into 25 tiles (5 × 5 tiles) in total, and some of the tiles extend beyond at least one edge of the padded image by four pixels. In Fig. 1B, the individual tile has a predetermined size of 64 × 64 pixels, and the predetermined number of overlapping pixels is 12 pixels (a first number of pixels). However, the present example embodiment is not limited to thereto.

Fig. 1D illustrates the order of the tile division. In the present example embodiment, the padded image is divided into tiles in the left-to-right writing order (scripts). That is, the padded image is divided into tiles in the horizontal (lateral) direction, starting from the upper left edge of the padded image. After the right edge of the padded image, the tile division processes the left edge in the second row. In this way, the tile division is repeated in the horizontal (lateral) direction. As a result, as illustrated in Fig. 1B, some of the tiles extend beyond the right edge and the lower edge of the padded image.

In the present example embodiment, the number of pixels of each tile extending beyond the right edge (in the horizontal direction) of the padded image can be calculated by subtracting the number of pixels in the horizontal direction of the padded image from the sum of (the number of overlapping pixels) × 4, (the number of pixels obtained by subtracting twice the number of overlapping pixels from the number of pixels in the horizontal direction of the tile) × 3, and (the number of pixels obtained by subtracting the number of overlapping pixels from the number of pixels in the horizontal direction of the tile) × 2. The number of pixels of each tile extending beyond the lower edge (in the vertical direction) of the padded image can be calculated in a similar manner. The tile division method, the number of pixels, the calculation method used here are examples, and the present disclosure is not limited thereto.

In the present example embodiment, to handle the tiles extending beyond the padded image, as illustrated in Fig. 1C, different overlapping pixels are set in some of the tiles. Specifically, in Fig. 1C, the overlapping pixels of the individual edge tile extending beyond the padded image are set to 16 pixels, which is four pixels more than the predetermined number of pixels.

A tile T5 extending beyond the right edge of the padded image in Figs. 1B and 1D overlaps an adjacent tile T4 to the left. Thus, the number of overlapping pixels of the tile T5 is set to 16 pixels. The same processing is performed on tiles T10, T15, and T20, which also extend beyond the right edge of the padded image. Further, the same processing is performed on tiles T21, T22, T23, T24, and T25, all of which differ from the tiles T5, T10, T15, and T20 in that the adjacent tiles are disposed above them and which extend beyond the lower edge of the padded image. In this way, even when some of the tiles extend beyond the padded image, the entire area of the padded image can be processed by the machine learning model.

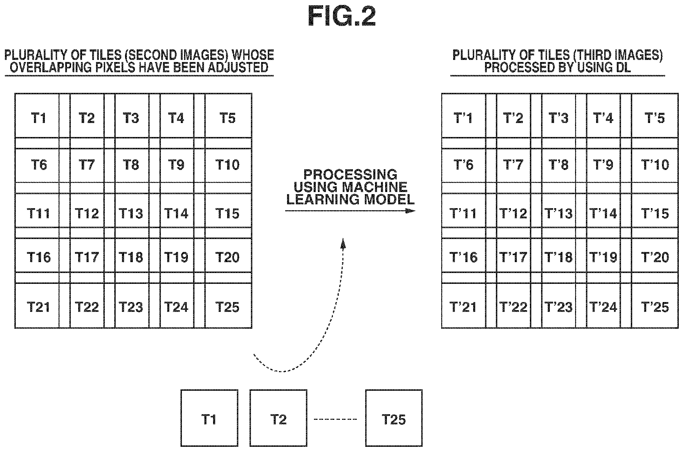

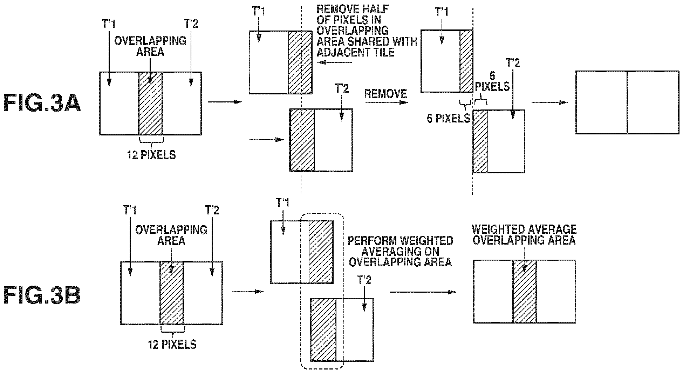

Next, a process for generating an output image based on the plurality of tiles (second images) will be described with reference to Figs. 2, 3A, and 3B. Fig. 2 illustrates processing of generating a plurality of processed tiles (third images) from the plurality of tiles by using a machine learning model, and Figs. 3A and 3B each illustrate processing of generating an output image (a fourth image) by synthesizing the plurality of processed tiles.

As illustrated in Fig. 2, in the present example embodiment, the plurality of tiles is sequentially inputted into the machine learning model and processed. That is, sequential processing is performed. In this way, the processing load can be reduced. As a result, desired image processing can be accurately executed without depending on a central processing unit (CPU), a graphics processing unit (GPU), or an application-specific integrated circuit (ASIC) memory used in the processing.

Further, Fig. 3A illustrates an example of process of synthesizing processed tiles by concatenating the tiles in a spatial direction. Fig. 3B illustrates an example of processing of synthesizing processed tiles by weighted averaging.

In Fig. 3A, the processed tiles T'1 and T'2, which are located adjacent to each other, are concatenated after half, that is, six pixels, of the 12 overlapping pixels included in each of these processed tile are removed from each of the processed tiles T'1 and T'2. However, the concatenation processing is not limited to this processing. For example, the processed tiles T'1 and T'2 may be concatenated after 10 out of 12 overlapping pixels included in the processed tile T'1 is removed and 2 out of 12 overlapping pixels included in the processed tile T'2 is removed. The processing for synthesizing processed tiles by the concatenation in the spatial direction is preferable because the processing load is small, making the processing speed faster.

In Fig. 3B, the processed tiles are synthesized by performing weighted averaging processing on the respective numbers of overlapping pixels included in the processed tile T'1 and the processed tile T'2. This processing is preferable because the processed tiles can be smoothly connected, providing a high-quality output image. The tiles may be synthesized after the pixels corresponding to the padding pixels added to the periphery of the input image are removed.

In the present example embodiment, only the overlapping pixels of the edge tiles extending beyond the padded image are increased from the predetermined number of pixels. Thus, exceptional processing is performed only on the tiles at predetermined positions (for example, at edges). Such a configuration allows, in an image processing method capable of accurately processing input images of various sizes, the load of tile division processing to be reduced. In the processing according to the present example embodiment, it is preferable that the overlapping areas, the additional areas, and the number of pixels of the individual tile each be defined as a predetermined number of pixels, regardless of the size of the input image. Such a configuration allows the processing for dividing the input image into tiles to be executed regardless of the size of the input image. Further, the entire area of the input image or the padded image can be accurately processed by adjusting the tile size in an adjustment step, which will be described below.

The image processing method described above is an example, and the present disclosure is not limited thereto. Details of other image processing methods, etc., will be described in the following example embodiments.

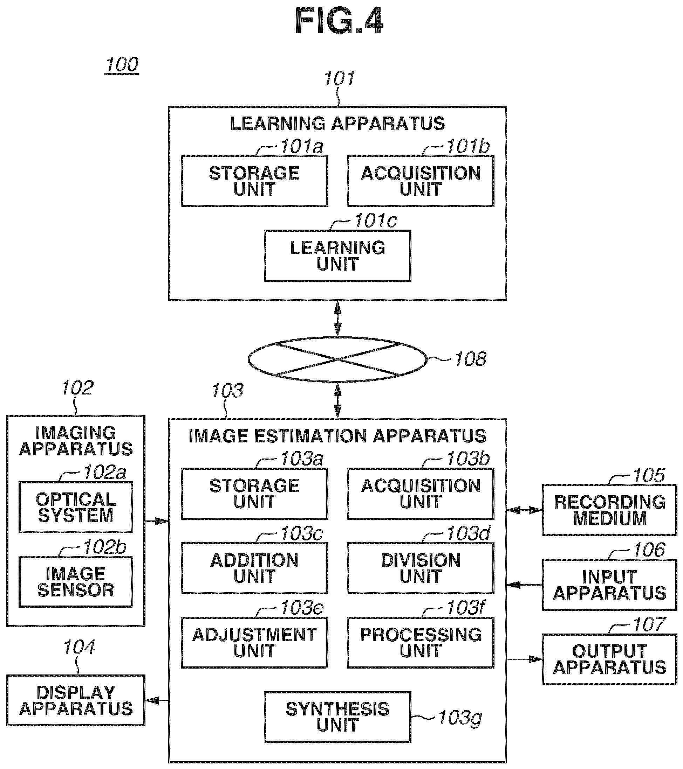

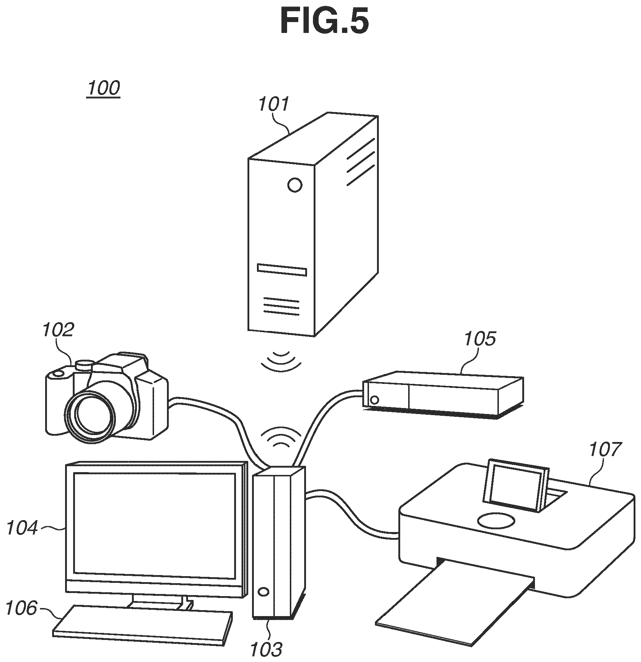

Next, an image processing system using a machine learning model according to the first example embodiment will be described with reference to Figs. 4 and 5.

The machine learning model according to the present example embodiment is a model constructed using a neural network. However, the present disclosure is not limited thereto. It is sufficient that the machine learning model according to the present example embodiment is a mathematical model obtained by deep learning. As the machine learning model according to the present example embodiment, for example, a model comprises of a convolutional neural network (CNN) can be used. Alternatively, as the machine learning model, a model constructed using a generative adversarial network (GAN), a recurrent neural network (RNN), a fully connected network (FCN), or a transformer may be used. In the following description, to avoid redundant expression, a model constructed using a neural network may be simply referred to as a neural network.

Fig. 4 is a block diagram of an image processing system 100 according to the present example embodiment. Fig. 5 is a diagram illustrating an external appearance of the image processing system 100.

The image processing system 100 includes a learning apparatus 101, an imaging apparatus 102, an image estimation apparatus 103, a display apparatus 104, a storage medium 105, an input apparatus 106, an output apparatus 107, and a network 108.

The learning apparatus 101 includes a storage unit 101a, an acquisition unit 101b, and a learning unit 101c. Details of the learning apparatus 101 will be described below.

The imaging apparatus 102 includes an optical system 102a and an image sensor 102b. The optical system 102a collects light incident on the imaging apparatus 102 from a subject space. The image sensor 102b receives an optical image of a subject formed via the optical system 102a to acquire a captured image (a blurred image).

The image sensor 102b is a charge-coupled device (CCD) sensor, a complementary metal-oxide semiconductor (CMOS) sensor, or the like.

The imaging apparatus 102 can acquire information about imaging conditions for the captured image (the focal distance and the aperture of the optical system 102a, the number of pixels, the pixel pitch, and the type of optical low pass filter of the image sensor 102b, the imaging mode, the International Organization for Standardization (ISO) sensitivity at the time of image-capturing, etc.) together with the captured image. In addition, development conditions (the image format, the noise reduction intensity, the sharpness intensity, the image compression ratio, etc.) for the captured image can also be acquired together with the captured image. In addition, the information acquired together with the captured image can be transmitted to an acquisition unit 103b of the image estimation apparatus 103, which will be described below, together with the captured image. Further, a storage unit that stores acquired images, a display unit that displays the acquired images, a transmission unit that transmits the acquired images to the outside, an output unit that stores the acquired images in an external storage medium, etc., are not illustrated. A control unit that controls each unit of the imaging apparatus 102 is not illustrated, either.

The image estimation apparatus 103 includes a storage unit 103a, an acquisition unit 103b, an addition unit 103c, a division unit 103d, an adjustment unit 103e, a processing unit (an estimation unit) 103f, and a synthesis unit 103g. Details of the image processing executed by the image estimation apparatus 103 will be described below.

The image processing according to the present example embodiment uses a machine learning model, and information about the weights (parameters) of the machine learning model is read from the storage unit 103a.

The weight information according to the present example embodiment is learned by the learning apparatus 101. The image estimation apparatus 103 reads the weight information from the storage unit 101a via the network 108 in advance, and stores the weight information in the storage unit 103a. The weight information to be stored may be numerical values of the weights or may be weights in an encoded format. Details of the learning of the machine learning model and the image processing using the weights according to the present example embodiment will be described below.

A blur-reduced image (an output image) is output to at least one of the display apparatus 104, the storage medium 105, and the output apparatus 107. The display apparatus 104 is, for example, a liquid crystal display, a projector, or the like. The user can check an image being processed via the display apparatus 104, and can perform an image editing operation, etc., via the input apparatus 106. The storage medium 105 is, for example, a semiconductor memory, a hard disk, a server on the network, or the like. The input apparatus 106 is, for example, a keyboard, a mouse, or the like. The output apparatus 107 is, for example, a printer.

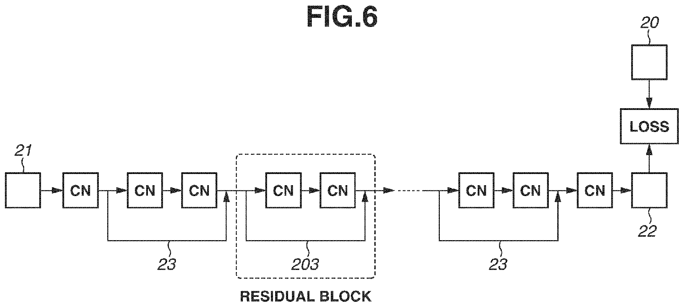

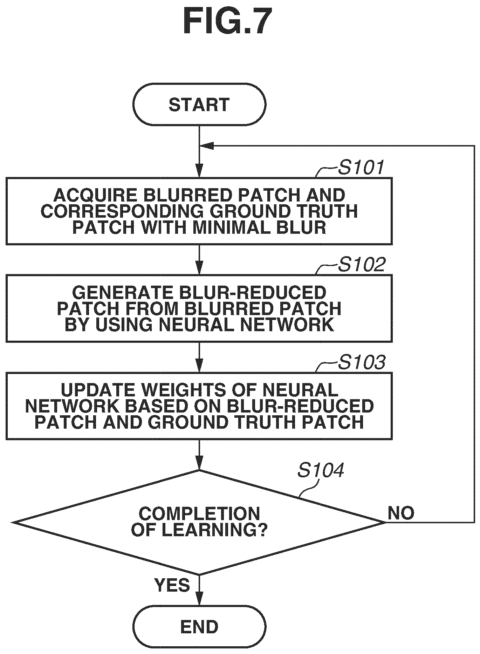

Next, a learning (training) method for a machine learning model according to the present example embodiment will be described with reference to Figs. 6 and 7. This learning method is executed by the learning apparatus 101. The learning method for the machine learning model corresponds to a method for generating a learned model.

Fig. 6 illustrates a process for updating the weights in the neural network (the machine learning model). Fig. 7 is a flowchart relating to learning of the neural network. The acquisition unit 101b and the learning unit 101c mainly execute the steps in Fig. 7. In the present example embodiment, a case will be described where processing performed by the machine learning model is used for reducing image blur (image restoration, sharpening). However, the present disclosure is not limited thereto. The processing performed by the machine learning model may be upscaling (super-resolution), enhancement of contrast, improvement of brightness, denoising, defocus blur conversion, lighting conversion, etc. By using training images corresponding to target processing, the machine learning model capable of the target processing can be trained as with the method described below.

In Fig. 6, "CN" represents a convolutional layer. In an individual convolution layer CN, an input is convolved by using filters, and the obtained convolved result is summed with biases, and the obtained summed result is non-linearly transformed by an activation function.

The components of the filters and the initial value of the biases are arbitrary values, and are determined by random numbers in the present example embodiment. As the activation function, for example, a rectified linear unit (ReLU), a sigmoid function, or the like can be used. The multidimensional array that is output in each layer except the final layer is a feature map.

The feature map is a four-dimensional array that has dimensions of batch, height, width, and channel. A skip connection 23 synthesizes the feature maps that are output from discontinuous layers. Feature maps may be synthesized by obtaining the sum per element or performing concatenation in the channel direction.

In addition, each element (block or module) in a dotted frame in Fig. 6 represents a residual block. A network in which residual blocks are multi-layered is called a residual network, and is widely used in image processing by deep learning (DL).

The present example embodiment uses the neural network configuration illustrated in Fig. 6. However, the present disclosure is not limited thereto. For example, an inception module may be used. In this case, convolution layers having different convolution filter sizes are arranged in parallel, and a plurality of feature maps obtained are integrated, so as to obtain a final feature map. Further, a network may be configured by multilayering other elements such as dense blocks including dense skip connections.

First, in step S101, the acquisition unit 101b acquires a blurred patch 21 (e.g., area) and a corresponding sharp ground truth patch 20 with minimal blur, which are training images. In the present example embodiment, a patch is a small image having a predetermined number of pixels. For example, the blurred patch has 128 × 128 pixels, and the corresponding ground truth patch has 128 × 128 pixels. The blurred patch and the corresponding ground truth patch may be acquired by capturing the same subject by using an optical system having high optical performance and capturing less blurred images and an optical system having low optical performance and capturing more blurred images, and cutting out (trimming) a corresponding portion from each of the two captured images. Alternatively, by performing numerical calculation, an effect (aberration and diffraction) of the optical system 102a may be given to the ground truth patch with minimal blur. In this way, a blurred patch corresponding to one acquired by the imaging apparatus 102 can be generated. In the present example embodiment, the ground truth patch corresponding to the blurred patch is generated by numerical calculation. However, the present disclosure is not limited thereto.

Next, in step S102, the learning unit 101c generates a blur-reduced patch 22 from the blurred patch 21 by using the neural network. The blur-reduced patch 22 and the ground truth patch 20 ideally match each other. Further, by inputting image information to the neural network together with the blurred patch, the blur reduction in consideration of the image information may be performed. For example, if the focal distance and the aperture of the optical system 102a are used as the information about the imaging conditions, the effect of aberration and diffraction which are blurs unique to these conditions, can be accurately corrected.

Next, in step S103, the learning unit 101c updates the weights of the neural network based on reducing the errors between the ground truth patch 20 and the blur-reduced patch 22. The weights include the components of the filters of each layer and biases. Backpropagation is used for updating the weights. However, the present disclosure is not limited thereto. In mini-batch learning, the errors between a plurality of ground truth patches 20 and a plurality of blur-reduced patches 22, which are the estimation results obtained based on the ground truth patches 20, are obtained, and the weights are updated. For example, L2 norm, L1 norm, or the like may be used as the loss function which represents the errors. The update method (the learning method) for the weights is not limited to the mini-batch learning. Batch learning or online learning may be alternatively used.

Next, in step S104, the learning unit 101c determines whether the learning of the neural network is completed. The completion of learning can be determined by determining whether the number of weight update iterations has reached a predetermined threshold value, or whether the amount of change in weight at the update is smaller than a predetermined threshold value, for example. In step S104, if the learning unit 101c determines that the learning is not completed (NO in step S104), the process returns to step S101, and a plurality of new blurred patches 21 and corresponding ground truth patches 20 are acquired. In step S104, if the learning unit 101c determines that the learning is completed (YES in step S104), the learning apparatus 101 ends the learning and stores the weight information in the storage unit 101a.

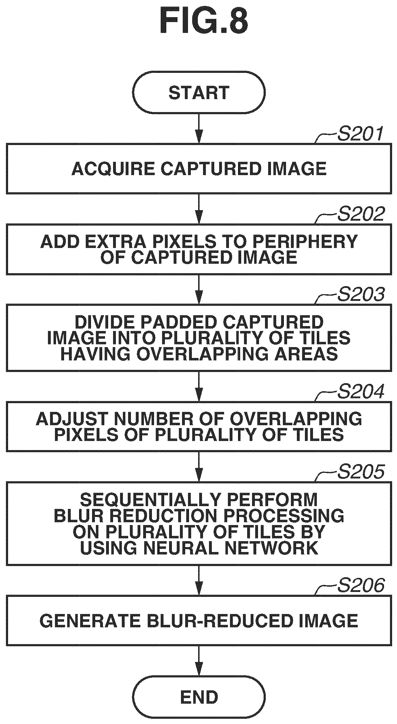

Next, generation of a blur-reduced image executed by the image estimation apparatus 103 according to the present example embodiment will be described with reference to Fig. 8. Fig. 8 is a flowchart relating to the generation of a blur-reduced image. The acquisition unit 103b, the addition unit 103c, the division unit 103d, the adjustment unit 103e, the processing unit 103f, and the synthesis unit 103g of the image estimation apparatus 103 mainly execute the steps in Fig. 8.

First, in step S201, the acquisition unit 103b acquires a captured image. The captured image in the present example embodiment is a blurred image as in the learning. In the present example embodiment, the captured image is an image that has been transmitted from the imaging apparatus 102. However, the present disclosure is not limited thereto. In the present example embodiment, the size of the captured image is 256 × 256 pixels. In addition, image information may be acquired together with the captured image and used in steps described below.

In step S202, the addition unit 103c generates a padded image (the first image) having pixels (an additional area) by adding a predetermined number of padding pixels to the periphery of the captured image. In the present example embodiment, the predetermined number of padding pixels is six pixels in each of the vertical direction and the horizontal direction. The same number of pixels is added to each of the four sides of the captured image by the mirroring. In this way, the image size (a first size) after padding is 268 × 268 pixels.

According to the present example embodiment, a predetermined fixed value is used as the predetermined number of padding pixels. However, the present disclosure is not limited thereto. For example, the predetermined number of padding pixels may be determined by using a predetermined numerical table based on the number of pixels of the image sensor 102b included in the image information acquired together with the captured image. In a case where the image information cannot be acquired, a value instructed by the user may be used as the predetermined number of padding pixels.

In step S203, the division unit 103d divides the padded image into a plurality of tiles (second images) each having a predetermined number of pixels. In the present example embodiment, the predetermined size (a second size) of the individual tile is 64 × 64 pixels. In addition, each of the plurality of tiles has portions (overlapping areas) that overlap its adjacent tiles by the predetermined number of pixels. In the present example embodiment, the predetermined number of overlapping pixels between adjacent tiles is 12 pixels (the first number of pixels) in the horizontal direction and 12 pixels in the vertical direction.

In the present example embodiment, predetermined fixed values are used as the predetermined number of tile pixels and the predetermined number of overlapping pixels. However, the present disclosure is not limited thereto. For example, the values may be determined by using a predetermined numerical table based on the number of pixels of the image sensor 102b included in the image information acquired together with the captured image. In a case where the image information cannot be acquired, values specified by the user may be used as the predetermined number of tile pixels and the predetermined number of overlapping pixels.

In the present example embodiment, as in the order illustrated in Fig. 1D, the padded image is divided into tiles in the left-to-right writing order. That is, the padded image is divided into tiles in the horizontal (lateral) direction, starting from the upper left edge of the padded image. After reaching the right edge of the padded image, the tile division restarts from the left edge in the second row. In this way, the tile division is repeated in the horizontal (lateral) direction. As a result, some of the tiles extend beyond the right edge and the lower edge of the padded image by four pixels due to the tile division. Each of the tiles obtained by the processing of the division unit 103d has one to four overlapping areas each having the predetermined number of pixels, depending on its position in the padded image.

The tile division method according to the present example embodiment is an example, and the present disclosure is not limited thereto. For example, the upper right edge of the padded image may be set as the starting point of the tile division, and the tile division may be performed in the order of right-to-left vertical writing. In this case, some of the tiles extend beyond the lower edge and the left edge of the padded image.

When the padded image is divided into the plurality of tiles each having a predetermined number of pixels, if some of the tiles extend beyond the edge of the padded image, in step S204, the adjustment unit 103e adjusts the number of overlapping pixels such that each tile has a certain number of pixels. According to the present example embodiment, as illustrated in Fig. 1B, some of the tiles extend beyond the right edge and/or the lower edge of the padded image by four pixels due to the tile division. Thus, the number of overlapping pixels of the tiles positioned along the right edge and/or the lower edge of the padded image is increased to 16 pixels by adding four pixels, which is the number of extending pixels, to the predetermined number of pixels, which is 12 pixels. For example, since the tile T5 extending beyond the right edge of the padded image in Fig. 1B overlaps its adjacent tile T4 to the left, the number of overlapping pixels therebetween is set to 16 pixels.

In this way, the processing by the division unit 103d and the adjustment unit 103e generates tiles each including one or more overlapping areas having the predetermined number of pixels, and tiles each including an overlapping area having the number of pixels greater than the predetermined number of pixels. In this way, the size of the tiles inputted into the machine learning model, which will be described below, can be kept consistent.

The method for adjusting the number of overlapping pixels between the adjacent tiles according to the present example embodiment is an example, and the present disclosure is not limited thereto. For example, when some of the tiles extend beyond the edge of the padded image due to the tile division, the number of overlapping pixels between adjacent tiles may be adjusted by performing tile division starting from the edge of the padded image beyond which the tiles extend. Alternatively, when some of the tiles extend beyond the edge of the padded image due to the tile division, the number of overlapping pixels between adjacent tiles and tiles positioned along the edge and tiles at the center of the padded image may be adjusted. Further, after the division processing, processing of adding an additional area to a tile having a smaller number of pixels than the predetermined number of pixels may be performed.

In step S205, the processing unit 103f generates blur-reduced tiles (third images) by sequentially processing the plurality of tiles using a machine learning model. The same machine learning model as the configuration illustrated in Fig. 6 is used for generating the blur-reduced tiles. When the blur is reduced by using image information, the method described in step S102 is used. The weight information transmitted from the learning apparatus 101 and stored in the storage unit 103a is used.

In step S206, the synthesis unit 103g synthesizes the blur-reduced tiles to generate a blur-reduced image (an output image). In this step, the synthesis method using weighted averaging as illustrated in Fig. 3B is performed. Alternatively, the blur-reduced tiles may be synthesized after the pixels corresponding to the padding pixels added to the periphery of the captured image in the step S202 are removed.

The order of the steps according to the present example embodiment is an example, and the present disclosure is not limited thereto. The order of the steps may be changed as necessary, and the processing of the steps may be integrally performed.

In this way, according to the present example embodiment, the image processing using the machine learning model can be performed on images of various sizes with high accuracy.

In addition, in the example embodiment described above, the tiles have the same number of pixels (specifically, 64 × 64 pixels) in both the vertical direction and the horizontal direction. However, the present disclosure is not limited thereto. The tiles may have different numbers of pixels in the vertical direction and the horizontal direction. Furthermore, the overlapping areas included in the individual tile may have different predetermined numbers of pixels in the vertical direction and the horizontal direction. For example, a predetermined number of overlapping pixels (the first number of pixels) in an overlapping area shared with an adjacent image in the vertical direction and a predetermined number of overlapping pixels (the second number of pixels) in an overlapping area shared with an adjacent image in the horizontal direction may be set as different values. In this case, the adjustment unit 103e described above can increase the number of overlapping pixels such that at least one of the number of pixels extending beyond the padded image in the vertical direction and the number of pixels extending beyond the padded image in the horizontal direction becomes a third number of pixels.

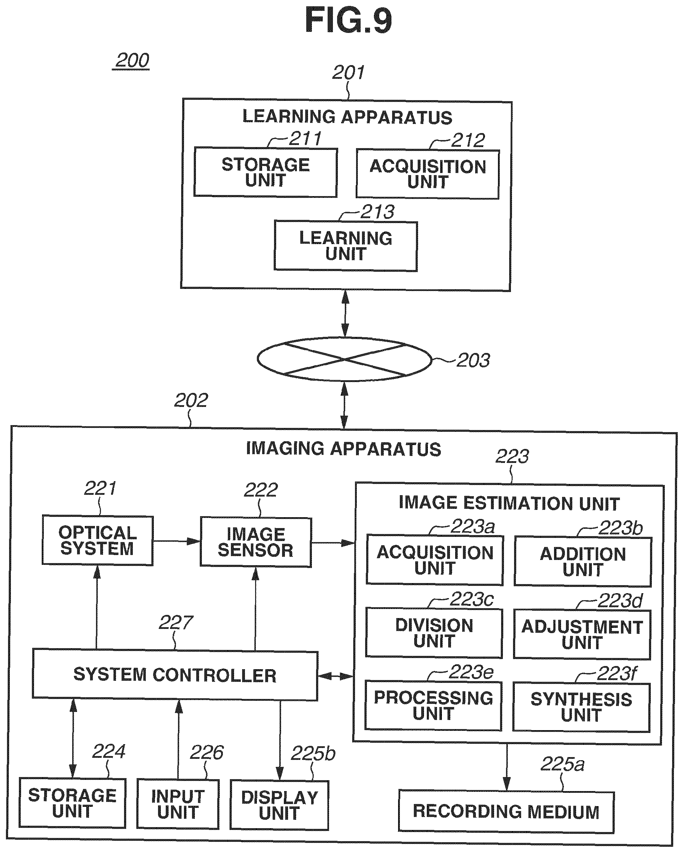

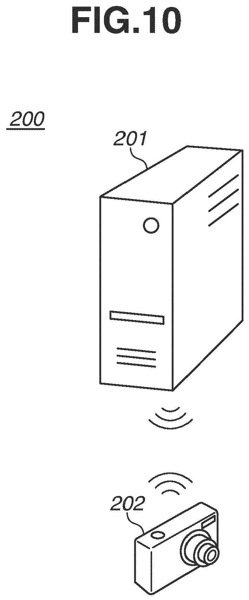

Next, an image processing system 200 according to a second example embodiment will be described with reference to Figs. 9 and 10. The image processing system 200 according to the present example embodiment differs from the image processing system according to the first example embodiment in that an imaging apparatus captures an image (a low-resolution image) and a processing unit in the imaging apparatus performs image processing.

Fig. 9 is a block diagram of the image processing system 200 according to the present example embodiment. Fig. 10 is a diagram illustrating an external appearance of the image processing system 200.

The image processing system 200 includes a learning apparatus 201 and an imaging apparatus 202 connected to each other via a network 203. The learning apparatus 201 and the imaging apparatus 202 do not need to be constantly connected via the network 203.

The learning apparatus 201 includes a storage unit 211, an acquisition unit 212, and a learning unit 213. The learning apparatus 201 trains a machine learning model by using these units to perform image processing of generating a high-resolution image from a low-resolution image. The components of the learning apparatus 201 are the same as those of the learning apparatus 101 according to the first example embodiment.

The imaging apparatus 202 captures an image of a subject space to acquire a captured image (a low-resolution image), and generates an upscaled (super-resolved) image from the captured image. Details of the image processing executed by the imaging apparatus 202 will be described below. The imaging apparatus 202 includes an optical system 221 and an image sensor 222. An image estimation unit 223 includes an acquisition unit 223a, an addition unit 223b, a division unit 223c, an adjustment unit 223d, a processing unit 223e, and a synthesis unit 223f.

A learning method of learning the machine learning model, the learning method being executed by the learning apparatus 201, differs from the learning method according to the first example embodiment in that a low-resolution patch and a high-resolution ground truth patch corresponding thereto are used as training images. Except the combination of the training images, the present learning method is the same as that according to the first example embodiment, and detailed description thereof will be omitted.

Information about the weights of the machine learning model is learned in advance by the learning apparatus 201 and stored in the storage unit 211. The imaging apparatus 202 reads the weight information from the storage unit 211 via the network 203, and stores the weight information in the storage unit 224. The image estimation unit 223 generates a high-resolution image (an output image) upscaled from the low-resolution image. The image estimation unit 223 generates a high-resolution image by using the information about the weights of the learned machine learning model stored in the storage unit 224, the low-resolution image (the captured image) acquired by the acquisition unit 223a, and the image information about the low-resolution image. The generated upscaled image is stored in a storage medium 225a.

In addition, when the user issues an instruction to display an upscaled image, the stored image is read and displayed on a display unit 225b. The captured image and its image information stored in the storage media 225a may be read, and the image estimation unit 223 may generate an upscaled image. A system controller 227 performs a series of control operations described above.

Next, generation of an upscaled image executed by the image estimation unit 223 according to the present example embodiment will be described. The acquisition unit 223a, the addition unit 223b, the division unit 223c, the adjustment unit 223d, the processing unit 223e, and the synthesis unit 223f mainly executes the steps in the image processing.

Steps S303 and S305 according to the present example embodiment are the same as steps S203 and S205 according to the first example embodiment. Thus, description thereof will be omitted. The present embodiment differs from the first example embodiment in that, in S301, a low-resolution image is acquired, and in S306, an upscaled image is generated from the low-resolution image.

First, in step S301, the acquisition unit 223a acquires a low-resolution image (a captured image). According to the present example embodiment, the captured image is acquired by the imaging apparatus 202 and stored in the storage unit 224. However, the present disclosure is not limited thereto. According to the present example embodiment, the size of the captured image is 256 × 256 pixels, for convenience of description with reference to Fig. 1. The size of the captured image according to the present example embodiment is not limited thereto.

Next, in step S302, the addition unit 223b generates a padded image (a first image) having a portion (an additional area) by adding a predetermined number of padding pixels around the borders of the captured image. According to the present example embodiment, the predetermined number of padding pixels is six pixels, and the same number of pixels is added to each of the four sides of the captured image. A method called replication (replica) is used as the padding method according to the present example embodiment. In the padding using the replica, the padding pixels are added around the borders of the captured image by repeatedly disposing six pixels to the outer side of the edge of the captured image. Thus, the image size after the padding is 268 × 268 pixels. According to the present example embodiment, a predetermined fixed value is used as the predetermined number of padding pixels. However, the present disclosure is not limited thereto. For example, the predetermined number of padding pixels may be determined by using a predetermined numerical value table based on the number of pixels of the image sensor 222 in the image information acquired together with the captured image. In a case where the image information cannot be acquired, a value instructed by the user may be used as the predetermined number of padding pixels.

In step S304, when the padded image is divided into a plurality of tiles, if some of the tiles extend beyond the edge of the padded image, the adjustment unit 223d adjusts the number of overlapping pixels such that each tile has a certain number of pixels. According to the present example embodiment, some of the tiles extend beyond the right edge and/or the lower edge of the padded image by four pixels due to the tile division. Thus, the number of overlapping pixels of the tiles disposed at the center of the padded image is increased to 16 pixels by adding four pixels, which is the number of extending pixels, to the predetermined 12 pixels. For example, the number of overlapping pixels between the tile T'3 and its adjacent tile T'2 to the left in Fig. 1D is increased to 16 pixels.

In step S306, the synthesis unit 223f synthesizes the upscaled tiles to generate an upscaled image (an output image). In this step, the tiles are synthesized by spatial concatenation illustrated in Fig. 3A. The tile synthesis is performed in consideration of the number of overlapping pixels that increases by upscaling. For example, when each tile resolution is increased by a factor 2, the predetermined number of overlapping pixels increases from 12 pixels to 24 pixels, and thus, the number of pixels to be removed for concatenation is 12 pixels, which is half of 24 pixels. As described above, the number of pixels to be removed for concatenation is not limited to half of the number of overlapping pixels. Alternatively, the upscaled tiles may be synthesized after the pixels corresponding to the padding pixels added around the borders of the captured image in the step S302 are removed.

In this way, according to the present example embodiment, the image processing using the machine learning model can be performed on images of various sizes with high accuracy.

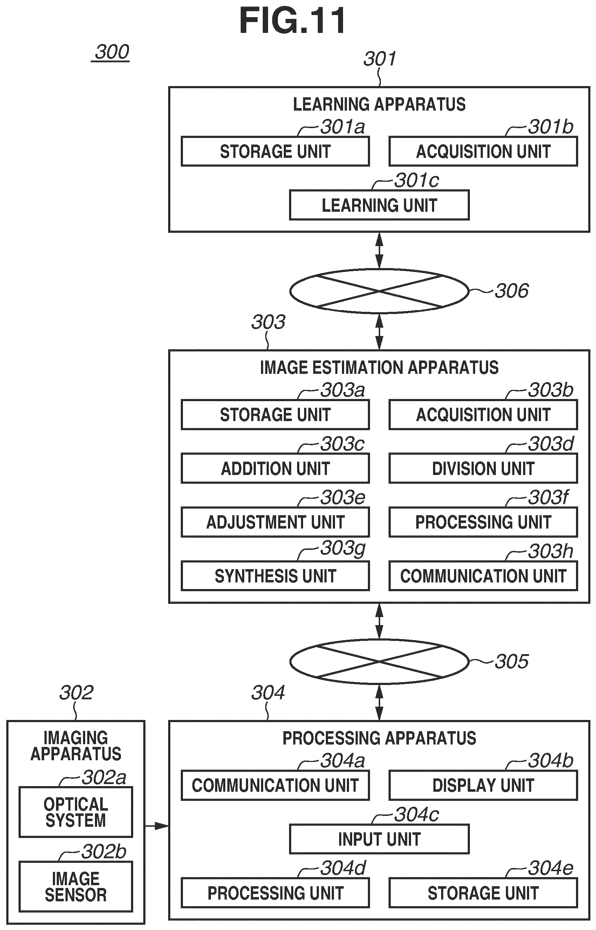

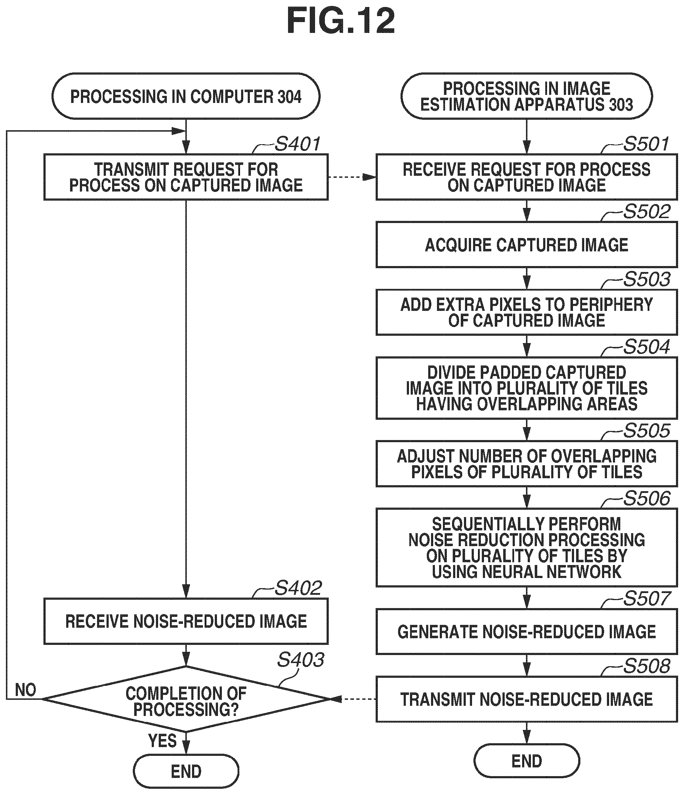

Next, an image processing system 300 according to a third example embodiment will be described with reference to Figs. 11 and 12. The present example embodiment differs from the first and second example embodiments in that the present example embodiment includes a processing apparatus (a computer) that transmits a captured image (a noisy image), which is an image processing target, to an image estimation apparatus and receives a processed output image (a noise-reduced image) from the image estimation apparatus. The noisy image according to the present example embodiment is an image having many high-frequency components (roughness in the image), such as an image captured with a high ISO sensitivity setting.

Fig. 11 is a block diagram of the image processing system 300 according to the present example embodiment. Fig. 12 is a flowchart relating to machine learning.

The image processing system 300 includes a learning apparatus 301, an imaging apparatus 302, an image estimation apparatus 303, and a processing apparatus (a computer) 304. The learning apparatus 301 and the image estimation apparatus 303 are, for example, servers. The computer 304 is, for example, a user terminal (a personal computer or a smartphone). The computer 304 is connected to the image estimation apparatus 303 via a network 305. The image estimation apparatus 303 is connected to the learning apparatus 301 via a network 306. That is, the computer 304 and the image estimation apparatus 303 can communicate with each other, and the image estimation apparatus 303 and the learning apparatus 301 can communicate with each other.

A learning method of learning a neural network, the learning method being executed by the learning apparatus 301, differs in that the method uses a noisy patch and a corresponding ground truth patch with less noise as the training images. Except the combination of the training images, the present learning method is the same as that according to the first example embodiment, and detailed description thereof will be omitted.

The configuration of the imaging apparatus 302 is the same as that of the imaging apparatus 102 according to the first example embodiment, and thus, description thereof will be omitted.

The image estimation apparatus 303 includes a storage unit 303a, an acquisition unit 303b, an addition unit 303c, a division unit 303d, an adjustment unit 303e, a processing unit 303f, a synthesis unit 303g, and a communication unit (a reception unit) 303h. The communication unit 303h has a function of receiving a request transmitted from the computer 304 and a function of transmitting an output image generated by the image estimation apparatus 303 to the computer 304.

The computer 304 includes a communication unit (a transmission unit) 304a, a display unit 304b, an input unit 304c, a processing unit 304d, and a storage unit 304e. The communication unit 304a has a function of transmitting a request for causing the image estimation apparatus 303 to execute processing on a captured image to the image estimation apparatus 303 and a function of receiving an output image processed by the image estimation apparatus 303. The display unit 304b has a function of displaying various kinds of information.

The information displayed by the display unit 304b includes, for example, the captured image to be transmitted to the image estimation apparatus 303 and the output image received from the image estimation apparatus 303. The user enters an instruction or the like to start image processing through the input unit 304c. The processing unit 304d has a function of performing image processing including sharpening (adjusting sharpness of) the output image received from the image estimation apparatus 303. The storage unit 304e stores, for example, the captured image acquired from the imaging apparatus 302, and the output image received from the image estimation apparatus 303.

Next, image processing according to the present example embodiment will be described. The image processing according to the present example embodiment differs from that according to the first example embodiment in that the image processing is started in response to when the user instructs to start the image processing via the computer 304, and is executed by the image estimation apparatus 303. First, the operation of the computer 304 will be described.

First, in step S401, the computer 304 transmits a request for a process on a captured image to the image estimation apparatus 303. Any method can be used to transmit the captured image to be processed to the image estimation apparatus 303. For example, the captured image may be uploaded to the image estimation apparatus 303 simultaneously with step S401, or may be uploaded to the image estimation apparatus 303 prior to step S401. The captured image may be an image stored on a server different from the image estimation apparatus 303. In addition, in step S401, the computer 304 may transmit identification (ID) for user authentication, image information, etc., together with the request for a process on the captured image.

In step S402, the computer 304 receives an output image generated in the image estimation apparatus 303.

Next, the operation of the image estimation apparatus 303 will be described.

First, in step S501, the image estimation apparatus 303 receives the request for a process on the captured image transmitted from the computer 304. The image estimation apparatus 303 determines that the process on the captured image has been instructed, and executes the processing in step S502 and subsequent steps.

In step S502, the acquisition unit 303b acquires the captured image. In the present example embodiment, the captured image is transmitted from the computer 304. The acquisition unit 303b may acquire image information together with the captured image to be used in the subsequent steps.

Steps S503 to S507 are the same as steps S202 to S206 in the first example embodiment, and description thereof will be omitted.

Next, in step S508, the image estimation apparatus 303 transmits an output image to the computer 304.

The above-described configuration according to the present example embodiment enables the image processing using the machine learning model to be performed on images of various sizes with high accuracy.

### (Other Example Embodiments)

The present disclosure can also be realized by a process in which a program that carries out one or more functions of the above-described example embodiments is supplied to a system or an apparatus via a network or a storage medium, and one or more processors in a computer of the system or the apparatus read and execute the program. In addition, the present disclosure can also be realized by a circuit (for example, an ASIC) that implements one or more functions.

According to each example embodiment, an image processing method, an image processing apparatus, a program, and a storage medium that are capable of performing image processing using a machine learning model on images of various sizes with high accuracy. The image processing apparatus may be any apparatus having the image processing functions of the present disclosure, and may be realized in the form of an imaging apparatus or a personal computer.

While favorable example embodiments of the present disclosure have been described above, the present disclosure is not limited thereto, and various modifications and changes can be made within the scope of the gist of the present disclosure.

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc^{™} (BD)), a flash memory device, a memory card, and the like.

While the present disclosure has been described with reference to embodiments, it is to be understood that the present disclosure is not limited to the disclosed embodiments. The scope of the following claims is to be accorded the broadest interpretation so as to encompass all such modifications and equivalent structures and functions.

## Claims

1. An image processing method comprising:
generating, by dividing a first image, a plurality of second images each of which is smaller than the first image; and
generating a plurality of third images based on the plurality of second images,
wherein the plurality of second images includes an image including an overlapping area having a first number of pixels that overlap an adjacent image and an image including an overlapping area having a second number of pixels that overlap an adjacent image, the second number of pixels being different from the first number of pixels, and
wherein the plurality of third images is generated by using a machine learning model.

2. The image processing method according to claim 1, comprising generating the first image by adding to an input image an additional area to at least one border of the input image.

3. The image processing method according to claim 1 or 2,
wherein, in generating the plurality of second images, an overlapping area in a second image positioned at an outermost edge among the plurality of second images has the first number of pixels, and
wherein, in generating the plurality of second images, an overlapping area in a second image other than the second image positioned at the outermost edge has the second number of pixels.

4. The image processing method according to any one of claims 1 to 3, wherein the first number of pixels is any one of a predetermined fixed value, a value based on an instruction from a user, a value based on an imaging apparatus used for acquiring the first image, and a value based on an image-capturing mode of the imaging apparatus.

5. The image processing method according to any one of claims 1 to 4, wherein the second number of pixels is any one of a predetermined fixed value, a value based on an instruction from a user, a value based on an imaging apparatus used for acquiring the first image, and a value based on an image-capturing mode of the imaging apparatus.

6. The image processing method according to claim 2, wherein the number of pixels in the additional area is any one of a predetermined fixed value, a value based on an instruction from a user, a value based on an imaging apparatus used for acquiring the input image, and a value based on an image-capturing mode of the imaging apparatus.

7. The image processing method according to any one of claims 1 to 6, comprising generating a fourth image by synthesizing the plurality of third images.

8. The image processing method according to claim 7, wherein, in generating the fourth image, the plurality of third images is synthesized by:
spatially concatenating the third images adjacent to each other after removing at least a part of the overlapping area in the plurality of third images; or
by performing weighted averaging on the plurality of third images.

9. The image processing method according to any one of claims 1 to 8,
wherein, in generating the plurality of second images, the plurality of second images is generated, the second images including an image that includes at least one overlapping area having a third number of pixels shared with an adjacent image in a horizontal direction and includes at least one overlapping area having a fourth number of pixels shared with an adjacent image in a vertical direction and an image that includes at least one overlapping area having a fifth number of pixels shared with an adjacent image in the horizontal or vertical direction, and
wherein the third number of pixels, the fourth number of pixels, and the fifth number of pixels are different from each other.

10. The image processing method according to any one of claims 1 to 9, comprising adjusting the plurality of second images,
wherein the plurality of second images includes an image having a predetermined number of pixels and an image having the number of pixels smaller than the predetermined number of pixels, and
wherein, in adjusting the plurality of second images, the image having the number of pixels smaller than the predetermined number of pixels is adjusted to have the predetermined number of pixels.

11. The image processing method according to claim 10, wherein, in adjusting the plurality of second images, by adding an additional area around the borders of the image having the number of pixels smaller than the predetermined number of pixels, the number of pixels is adjusted to be the predetermined number of pixels.

12. The image processing method according to claim 10, wherein, in adjusting the plurality of second images, by increasing an overlapping area in the image having the number of pixels smaller than the predetermined number of images, the number of pixels is adjusted to be the predetermined number of pixels.

13. An image processing apparatus comprising at least one processor configured to perform operations as:
a first means for generating, by dividing a first image, a plurality of second images each of which is smaller than a first image; and
a second means for generating a plurality of third images based on the plurality of second images,
wherein the plurality of second images includes an image including an overlapping area having a first number of pixels that overlap an adjacent image and an image including an overlapping area having a second number of pixels that overlap an adjacent image, and
wherein the second means generates the plurality of third images by using a machine learning model.

14. A program causing a computer to execute the image processing method according to any one of claims 1 to 12.

15. A non-transitory computer-readable storage medium that stores the program according to claim 13.
